# FASCICULE DE BREVET EUROPEEN

(11) **EP 4 123 270 B1**
(45) Date de publication et mention de la délivrance du brevet: **10.09.2025**
(21) Numéro de dépôt: 22185569.5
(22) Date de dépôt: 18.07.2022
(51) Int. Cl.: G01H 11/06, G01S 7/52, G01S 15/89

(54) **DISPOSITIF D'ÉMISSION ET/OU DÉTECTION D'ONDES ACOUSTIQUES À FRÉQUENCE DE RÉSONNANCE VARIABLE**
VORRICHTUNG ZUM SENDEN UND/ODER ERFASSEN VON AKUSTISCHEN WELLEN MIT VARIABLER RESONANZFREQUENZ
DEVICE FOR TRANSMITTING AND/OR DETECTING ACOUSTIC WAVES WITH VARIABLE RESONANCE FREQUENCY

(30) Priorité: 19.07.2021 FR 2107781
(43) Date de publication de la demande: 25.01.2023
(73) Titulaire: Commissariat à l'Energie Atomique et aux Energies Alternatives, 75015 Paris (FR)
(72) Inventeur: GARDIEN, François, 38054 Grenoble Cedex 09 (FR); BLARD, François, 38054 Grenoble Cedex 09 (FR); FAIN, Bruno, 38054 Grenoble Cedex 09 (FR)
(74) Mandataire: Hautier IP

(56) Documents cités:
- WO-A1-2012/152493
- CN-A- 101 294 796
- CN-A- 101 458 332
- US-A1- 2020 174 116
- US-B2- 7 046 015

## Description

### DOMAINE TECHNIQUE

La présente invention concerne le domaine des capteurs ultrasonores, particulièrement les transducteurs micro machiné piézoélectrique de type pMUT ou capacitif de type cMUT, ayant un fort facteur de qualité, notamment entre 10 et 100.

La présente invention trouvera des applications dans la détection d'empreintes digitales, l'imagerie médicale échographique portative, la détection de présence ou encore la domotique et la réalité virtuelle.

### ETAT DE LA TECHNIQUE

Les capteurs de proximité tels que les capteurs à ultrasons ont été largement utilisés pour détecter la distance aux objets. En particulier, les capteurs à ultrasons sont généralement configurés pour générer des signaux ultrasonores avec un transducteur à ultrasons et pour recevoir les signaux d'écho réfléchis par les objets. En calculant l'intervalle de temps entre l'envoi du signal ultrasonore et la réception du signal d'écho, la distance à un objet peut être déterminée sur la base de la vitesse de propagation du son à travers le milieu de propagation tel que l'air.

Traditionnellement, l'application des capteurs à ultrasons est limitée par l'existence d'une zone aveugle, qui est provoquée par des vibrations mécaniques parasites du transducteur à ultrasons. Les transducteurs ultrasoniques sont généralement configurés pour générer des signaux ultrasonores lorsqu'ils sont actionnés par un signal d'excitation. Par exemple, une impulsion d'énergie électrique peut faire vibrer un transducteur piézoélectrique à une fréquence donnée en raison de la piézoélectricité, générant ainsi une onde ultrasonore. Le signal ultrasonore transmis est réfléchi par un objet, l'écho du signal ultrasonore peut alors être détecté et évalué pour déterminer une distance à l'objet. La réponse du transducteur à ultrason comporte la mesure de l'écho, qui est le signal d'intérêt, et des vibrations mécaniques parasites, non souhaitées. Si les vibrations mécaniques parasites sont trop importantes, il n'est pas possible d'identifier le signal d'intérêt, et donc de réaliser la mesure de temps de vol. L'amplitude des vibrations mécaniques parasites est importante juste après l'émission du signal ultrasonore, puis décroit avec le temps, si bien que cette problématique apparait en particulier lorsque le signal écho est attendu pour des temps courts. Ainsi, pour des objets situés à une faible distance, le signal d'intérêt ne peut pas être correctement mesuré. La zone aveugle est une zone spatiale entourant le transducteur à ultrasons dans laquelle les signaux d'écho ne peuvent pas être détectés de manière fiable.

Les méthodes existantes tentent de résoudre le problème de la zone aveugle en utilisant par exemple par une approche logicielle dans laquelle il y a un post-traitement du signal. Cependant, l'approche logicielle évite simplement la prise en considération par le capteur des signaux mesurés aux temps courts, et ainsi la détection, potentiellement erronée, d'un objet à faible distance, pour mieux repérer les signaux d'écho correspondant à une distance plus importante. Cela ne réduit ni ne supprime les vibrations parasites du transducteur, la zone aveugle est donc toujours présente. Autrement dit, les objets situés dans la zone aveugle ne peuvent toujours pas être détectés de manière fiable.

D'autres méthodes utilisent une approche électronique de post-traitement comme le document US 9921057 qui décrit un système comprenant un module atténuateur couplé électriquement avec le récepteur d'ultrasons. Le signal reçu pendant un temps donné correspondant à la zone aveugle est atténué. Ce système ne permet pas non plus de réduire la zone aveugle, mais uniquement de mieux détecter les objets en-dehors de la zone aveugle.

On connait par ailleurs, le document CN 101 294 796 qui décrit un détecteur supersonique de type réflexion à petite zone aveugle basé sur la multifréquence. Ici, le document propose d'utiliser deux fréquences qui sont émises, détectées et analysés en fonction des types de mesures courtes ou longues souhaitées. Cela ne réduit ni ne supprime les vibrations parasites du récepteur, la zone aveugle est donc toujours présente.

On connait le document US 7 046 015 qui décrit une mesure d'une distance ultrasonique permettant d'estimer la distance jusqu'à un objet en mesurant le temps de propagation d'une onde ultrasonore. Ce document propose ainsi une modulation des fréquences de l'émetteur pour d'abord envoyer une première onde de sorte à calibrer la fréquence au regard du temps de réception de l'onde puis d'utiliser une deuxième fréquence pour la mesure de la distance. Cela ne permet pas d'avoir une sensibilité satisfaisante de la mesure.

Il existe donc le besoin de proposer un système de transducteur qui permet d'optimiser la détection d'objets dans la zone aveugle.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un dispositif d'émission et/ou de réception d'ondes acoustiques, préférentiellement ultrasonores, selon la revendication 1.

L'invention propose un dispositif configuré pour moduler la fréquence de résonance du récepteur pour qu'il soit moins sensible. Ainsi, la sensibilité du récepteur est volontairement dégradée pendant une période de temps prédéfinie, pour que le récepteur soit moins sensible à l'onde directe et donc qu'il résonne de manière moins prononcée, permettant ainsi une réduction de la zone aveugle et donc des mesures à plus courtes distances. L'amplitude des oscillations est réduite à la réception de l'onde directe. Avantageusement, le modulateur de fréquence de résonance est configuré pour écarter les fréquences de résonance de l'émetteur et du récepteur, préférentiellement au moins le temps de la réception de l'onde directe, afin de réduire la zone aveugle.

L'invention permet ici de moduler la fréquence de résonance du récepteur contrairement aux documents connus qui conservent une même fréquence de résonance.

Un autre aspect concerne un procédé de détection d'ondes acoustiques par le dispositif d'émission et de réception d'ondes acoustiques tel que décrit ci-dessus comprenant les étapes ci-dessous :
- D'émission d'ondes acoustiques par l'émetteur à une fréquence d'émission de l'émetteur,
- De modulation de la fréquence de résonance du récepteur pendant une période de temps prédéterminée, pour l'éloigner de la fréquence d'émission de l'émetteur puis
- Détection d'une onde réfléchie par le récepteur.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma d'un système d'émission et de détection ultrasonore.
La figure 2 représente un graphe des oscillations du récepteur en l'absence de l'invention.
La figure 3 représente un graphe des oscillations du récepteur en l'absence de l'invention.
La figure 4 représente un graphe des oscillations du récepteur avec le système selon l'invention
La figure 5 représente un graphe de la fréquence de réception du récepteur avec le système selon l'invention
La figure 6 représente un schéma électrique d'un système de détection ultrasonore selon un mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, la période de temps prédéterminée est au moins égale à une période de temps de réception de l'onde directe 6 par le récepteur 3. L'invention permet de décaler la fréquence de résonance du récepteur au moins durant la réception de l'onde directe, puis avantageusement de la remettre à la fréquence de l'émission une fois l'onde directe passée.

Selon un exemple, la fréquence d'émission de l'émetteur 2 est la fréquence de résonance de l'émetteur 2.

Selon un exemple, la fréquence d'émission de l'émetteur 2 est fixe.

Selon un exemple, l'émetteur 2 et/ou le récepteur 3 est un transducteur micro machiné piézoélectrique de type pMUT.

Selon un exemple, le modulateur de la fréquence de résonance du récepteur 3 est configuré pour faire varier la polarisation du récepteur 3 au cours de la période de temps prédéterminée.

Selon un exemple, l'émetteur 2 et/ou le récepteur 3 est un transducteur micro machiné capacitif de type cMUT.

Selon un exemple, le modulateur de la fréquence de résonance du récepteur 3 est configuré pour varier la raideur électrostatique du récepteur au cours de la période de temps prédéterminée.

Selon un exemple, le modulateur de la fréquence de résonance du récepteur 3 comprend un amplificateur de charge 11 à contre -réaction négative configuré pour intégrer la charge générée par le récepteur 3 pour appliquer une tension de polarisation prédéfinie au récepteur.

Avantageusement, le dispositif est adapté à émettre et/ou recevoir des ondes acoustiques de fréquence comprise entre 100 Hz et 75 MHz, de préférence entre 1 kHz et 10 MHz, de préférence autour de 100 kHz

Selon un exemple, la période de temps prédéterminée débute en même temps que débute l'émission d'ondes acoustiques.

Cette synchronisation de l'émission des ondes acoustiques et de la modulation de la fréquence de résonance du récepteur permet de simplifier la modulation de la fréquence de résonance du récepteur et d'assurer une efficacité optimum. Selon une possibilité, la période de temps prédéterminée débute avant le début de l'émission d'ondes acoustiques. Selon une autre possibilité, la période de temps prédéterminée débute à la fin de l'émission d'ondes acoustiques.

Selon un exemple, le procédé comprend après l'émission d'ondes, la réception d'une onde directe 6 par le récepteur 3.

Selon un exemple, la modulation de la fréquence de résonance du récepteur 3 débute lors de la réception de l'onde directe 6 par le récepteur 3.

Selon un exemple, la modulation de la fréquence de résonance du récepteur 3 est simultanée à la réception d'une onde directe 6 par le récepteur 3.

Avantageusement, la modulation de la fréquence de résonance du récepteur est réalisée uniquement jusqu'à la fin de la réception de l'onde directe.

Selon un exemple, la modulation de la fréquence de résonance du récepteur 3 est réalisée par une variation de la polarisation du récepteur 3 ou une variation de la raideur électrostatique du récepteur 3.

Dans la description qui suit, lorsque l'on fait référence à des qualificatifs de position absolue, tels que les termes "avant", "arrière", "haut", "bas", "gauche", "droite", ou relative, tels que les termes "dessus", "dessous", "supérieur", "inférieur", ou à des qualificatifs d'orientation, tels que les termes "horizontal", "vertical", "à l'aplomb de", il est fait référence à l'orientation des figures, étant entendu que, en pratique, les dispositifs décrits peuvent être orientés différemment.

Sauf précision contraire, les expressions "approximativement", "sensiblement", et "de l'ordre de" signifient à 10 % près, de préférence à 5 % près.

Le dispositif selon l'invention est destiné à l'émission et/ou à la réception d'une onde acoustique. Le dispositif est par exemple un transducteur piézoélectrique ou capacitif adapté à émettre et/ou recevoir des ondes acoustiques sonores ou ultrasonores, par exemple des ondes acoustiques à des fréquences comprises entre 100 Hz et 75 MHz et de préférence entre 1 kHz et 10 MHz. Dans la suite de la description les termes acoustiques ou ultrasonores sont intervertibles.

Le dispositif comprend un émetteur 2 d'ondes acoustiques pouvant être des ondes ultrasonores.

Le dispositif comprend un récepteur 3 d'ondes acoustiques pouvant être des ondes ultrasonores.

Préférentiellement, selon l'invention l'émetteur 2 est distinct du récepteur 3. L'émetteur 2 et le récepteur 3 peuvent être de technologie strictement identique.

Le récepteur 3 reçoit des ondes ultrasonores générées par l'émetteur 2 et comprenant des ondes directes 6 et des ondes réfléchies 7. On entend par ondes directes 6 des ondes générées par l'émetteur 2 et qui parviennent au récepteur 3 sans être réfléchies, par exemple en se propageant dans le milieu environnant, qui peut être de l'air ou du liquide, ou via un support physique solide, comme par exemple le support du dispositif 1. On entend par ondes réfléchies 7 des ondes générées par l'émetteur 2 et qui parviennent jusqu'au récepteur 3 après avoir rencontré une surface d'un obstacle solide, en particulier la surface d'un objet situé sur la trajectoire des ondes émises 5 par l'émetteur 2 ; le récepteur 3 perçoit donc à la fois des ondes directes 6 et les ondes réfléchies 7. La mesure de l'onde réfléchie peut être utilisée pour évaluer la distance séparant l'objet 4 et le dispositif 1.

Dans certains cas, le récepteur 3 et l'émetteur 2 sont mis en œuvre dans un même dispositif. Dans d'autres cas, le récepteur 3 et l'émetteur 2 sont mis en œuvre dans des dispositifs séparés. Le dispositif selon l'invention peut être par exemple unitaire, c'est-à-dire qu'il forme un ensemble. Le dispositif selon l'invention est déplaçable. Préférentiellement l'émetteur 2 et le récepteur 3 sont immobiles l'un par rapport à l'autre. Selon un mode de réalisation, l'émetteur 2 et le récepteur 3 sont agencés sur une façade du dispositif 1 de sorte à ce que l'émetteur 2 émet vers l'extérieur du dispositif 1 et que le récepteur reçoive des ondes depuis l'extérieur du dispositif 1.

Selon un exemple préféré, l'émetteur 2 et le récepteur 3 sont chacun un transducteur acoustique piézoélectrique qui comprend classiquement une membrane flexible suspendue par sa périphérie à un support rigide. La membrane comporte un élément de conversion piézoélectrique constitué d'une couche piézoélectrique disposée entre deux électrodes. Lorsqu'une tension est appliquée entre les deux électrodes, un champ électrique apparaît dans la couche piézoélectrique, provoquant une déformation mécanique de la couche piézoélectrique et par conséquent une déformation de la membrane. A l'inverse, l'application d'une déformation mécanique à la membrane et donc à la couche piézoélectrique entraine une variation du champ électrique et donc une accumulation de charge dans les deux électrodes de l'élément de conversion piézoélectrique. De façon classique, un transducteur acoustique piézoélectrique comprend un circuit configuré pour, en émission, appliquer une tension d'excitation alternative entre les deux électrodes de l'élément de conversion piézoélectrique. Ceci provoque une vibration mécanique de la membrane conduisant à l'émission d'une onde acoustique. En réception, le circuit est configuré pour lire, entre les deux électrodes de l'élément de conversion piézoélectrique, un signal électrique, par exemple une tension alternative ou un courant alternatif, représentatif de la variation de charges, dans les électrodes, résultant d'une vibration de la membrane provoquée par une onde acoustique reçue. Le transducteur acoustique piézoélectrique est également dénommé transducteur micro-machiné piézoélectrique ou par l'abréviation pMUT.

Selon un autre exemple possible, l'émetteur 2 et le récepteur 3 sont chacun un transducteur acoustique capacitif qui comprend une membrane flexible également dénommée électrode mobile, une cavité arrière et une plaque arrière également dénommée électrode inférieure. En mode émission, une tension alternative est appliquée aux bornes du transducteur de la cellule créant ainsi une force électrostatique qui va entrainer un déplacement de la membrane. Ce déplacement va lui-même engendrer une pression acoustique rayonnée en face avant de la membrane. En mode réception, c'est la pression de l'onde acoustique appliquée sur la membrane qui provoque son déplacement. Ce déplacement entraine alors une variation de la capacité intrinsèque du dispositif. Le transducteur acoustique capacitif est également dénommé transducteur micro-machiné capacitif ou par l'abréviation cMUT.

Le dispositif selon l'invention permet notamment de mesurer la distance entre le dispositif et un objet, en mesurant le temps de propagation de l'onde ultrasonore. L'émetteur 2 est configuré pour émettre une onde acoustique 5 et le récepteur 3 est configuré pour recevoir l'onde réfléchie 7 par l'objet 4.

Le récepteur 3 étant classiquement plus proche de l'émetteur 2 que l'objet 4 n'est proche de l'émetteur 2, le récepteur 3 reçoit couramment une onde acoustique directe 6. Cette onde acoustique directe 6 excite le récepteur 3 plus tôt que l'onde réfléchie 7, le temps de parcours de l'onde réfléchie 7 étant plus important que celui de l'onde directe 6. Cette excitation du récepteur 3 par l'onde directe 6 entraine une vibration résiduelle du récepteur 3, plus précisément de la membrane flexible du récepteur 3, également dénommée pseudo-oscillations 8. La réception de l'onde directe 6 et /ou les pseudo-oscillations 8 sont des signaux parasites qui interfèrent avec la réception de l'onde réfléchie 7. En particulier, la période de temps durant laquelle le récepteur 3 est excité par l'onde directe 6 et les pseudo-oscillations 8 définissent une période ou zone dénommée zone aveugle 9. Cette zone 9 est un volume entourant le récepteur 3 défini par une composante d'une longueur qui est au moins égal à la moitié de la distance le séparant de l'émetteur 2, couramment ce volume est plus important du fait des pseudo oscillations 8 qui perdurent au niveau du récepteur 3. Cette zone aveugle 9 correspond à une période de temps durant laquelle l'excitation du récepteur 3 est due à l'onde directe 6. La période de temps correspondant à la zone aveugle 9 correspond à la période de temps pendant laquelle le récepteur 3 reçoit l'onde directe 6 et les pseudo- oscillations 8. Cet inconvénient est d'autant plus important que le dispositif de détection et/ou émission présente un haut facteur de qualité, notamment quand pour améliorer la sensibilité du dispositif, la fréquence d'émission de l'émetteur est à la fréquence de résonance du récepteur. A titre non limitatif, on entend par haut facteur de qualité, un facteur de qualité supérieur à 10 plus préférentiellement 50

L'émetteur 2 émet des ondes acoustiques à une fréquence d'émission tandis que le récepteur 3 présente une fréquence de résonance. La sensibilité du récepteur est optimale quand la fréquence d'émission est égale de la fréquence de résonance du récepteur. Préférentiellement, la fréquence d'émission correspond à la fréquence de résonance de l'émetteur 2. Préférentiellement, la fréquence d'émission est fixe. On entend par là que la fréquence d'émission n'est pas modulée par la présente invention.

Selon l'invention, le dispositif 1 d'émission et/ou de détection comprend un modulateur de la fréquence de résonance du récepteur 3. L'invention s'attache à la modification des propriétés mécanique du récepteur 3 pour permettre de réduire la zone aveugle 9.

Le modulateur de la fréquence de résonance du récepteur 3 est configuré pour prendre alternativement une première configuration de modulation, avantageusement dans laquelle la fréquence de résonance du récepteur est au plus proche de la fréquence d'émission de l'émetteur, et au moins une deuxième configuration de modulation dans laquelle la fréquence de résonance du récepteur est plus éloignée de la fréquence d'émission de l'émetteur 2 que dans la première configuration. On entend par éloignée quand la fréquence de résonance du récepteur est éloignée d'au moins 1/Q %, Q étant le facteur de qualité, préférentiellement d'au moins 2/Q %. La première configuration est avantageusement une configuration par défaut dans laquelle la fréquence de résonance du récepteur 3 n'est pas modulée. Selon cette première configuration par défaut, la fréquence de résonance du récepteur 3 est avantageusement assez proche de la fréquence d'émission. Selon une possibilité, la première configuration peut être une configuration dans laquelle la fréquence de résonance du récepteur 3 est modulée pour être au plus proche de la fréquence d'émission et ainsi optimiser la sensibilité du récepteur 3. La deuxième configuration est avantageusement une configuration dans laquelle la fréquence de résonance du récepteur 3 est volontairement modulée, préférentiellement éloignée de la fréquence d'émission de l'émetteur 2. Le fonctionnement du récepteur est volontairement modifié. Dans la deuxième configuration, l'écart entre la fréquence de résonance du récepteur 3 et de la fréquence d'émission de l'émetteur est plus important que dans la première configuration.

Selon l'invention, le dispositif comprend une unité de contrôle du modulateur de la fréquence de résonance. L'unité de contrôle est configurée pour activer le modulateur de la fréquence de résonance au moins pendant une période de temps prédéterminée. Cette modification de la fréquence de résonance est destinée à réduire la sensibilité du récepteur 3 au cours de ladite période de temps prédéterminée. La modulation ou modification de la fréquence de résonance du récepteur pendant la période de temps prédéterminée est un décalage de la fréquence de résonance du récepteur 3 par rapport à la fréquence d'émission de l'émetteur 2.

L'unité de contrôle du modulateur est configurée pour activer la première configuration de modulation et alternativement au moins la deuxième configuration de modulation du modulateur de la fréquence de résonance du récepteur 3.

Le modulateur de la fréquence de résonance est configuré pour que la deuxième configuration de modulation éloigne la fréquence de résonance du récepteur 3 de la fréquence d'émission de l'émetteur 2 pendant la période de temps prédéterminée.

Selon une possibilité, l'unité de contrôle du modulateur de la fréquence du récepteur 3 est également configurée pour activer le modulateur de la fréquence de résonance en dehors de la période de temps prédéterminée. Dans ce cas, en dehors de la période de temps prédéterminé, le modulateur de la fréquence de résonance prend avantageusement la première configuration de modulation, pouvant être avantageusement destiné à accorder la fréquence de résonance du récepteur 3 à la fréquence d'émission de l'émetteur 2.

La fréquence de résonance s'entend comme un optimum de sensibilité.

La période de temps prédéterminée est avantageusement une période de temps inférieure ou égale à la zone aveugle 9.

Avantageusement, la fin de la période de temps prédéterminée est antérieure ou égale à la fin de la zone aveugle 9, c'est-à-dire la fin des pseudo-oscillations 8.

Avantageusement, le début de la période de temps prédéterminée est antérieur au début de l'émission, ou égal au début de l'émission ou postérieur au début de l'émission, c'est à dire plus précisément pendant l'émission de l'onde l'acoustique par l'émetteur 2.

Selon le mode de réalisation de l'invention dans lequel le récepteur 3 et l'émetteur 2 sont distincts, il est avantageux que le début de la période de temps prédéterminé corresponde au début de l'émission de l'onde acoustique par l'émetteur 2. Par cette synchronisation, le récepteur 3 voit sa sensibilité dégradée avant de commencer à recevoir l'onde directe 6 ce qui va limiter son excitation et donc l'amplitude des pseudo-oscillations 8 et donc la durée de la zone aveugle 9.

Selon une alternative, le début de la période de temps prédéterminé correspond au début de la réception de l'onde directe 6 par le récepteur 3. De la même manière que pour le mode de réalisation précédemment décrit, la sensibilité du récepteur 3 étant dégradée, la réception de l'onde directe 6 est limitée réduisant les pseudo-oscillations 8 et donc la zone aveugle 9.

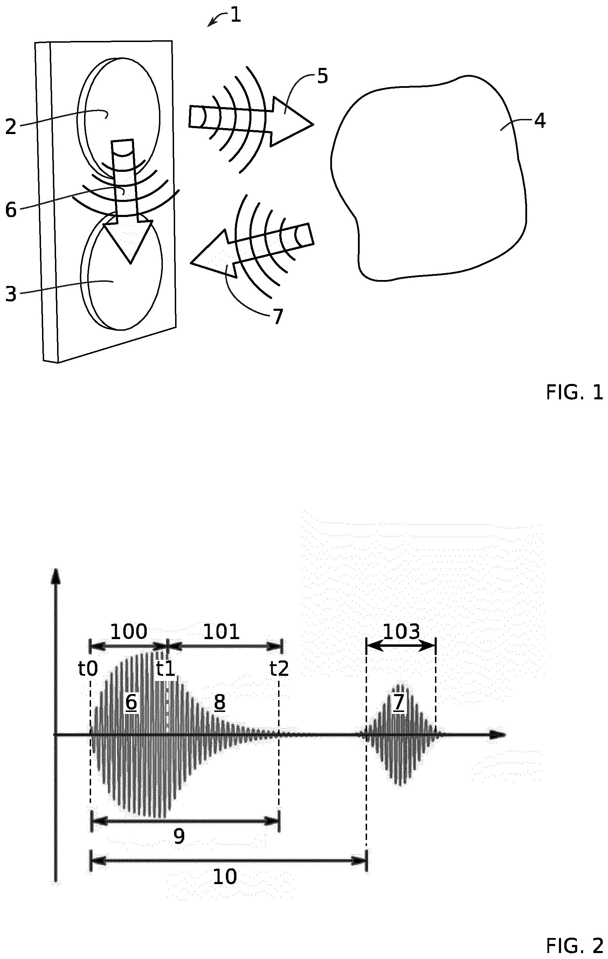

En figure 2, un graphe de signaux détectés par un récepteur 3 selon l'état de la technique est donné.

On constate sur cette figure une première période de temps 100 correspondant à la réception de l'onde directe 6 par le récepteur 3. Le début t0 de cette première période de temps 100 correspond au début de la réception de l'onde directe 6. Selon un mode de réalisation dans lequel l'émetteur 2 est très proche du récepteur 3, il peut être envisagé que le début t0 de cette première période de temps 100 correspond également au début de l'émission d'ondes par l'émetteur 2. A titre d'exemple, la distance entre l'émetteur 2 et le récepteur 3 est de l'ordre de quelques millimètres, plus précisément inférieure à 10 mm. A titre d'exemple dans l'air, 1mm est parcouru en environ 3µs. Si l'émetteur 2 et le récepteur 3 sont proches, le récepteur 3 reçoit quasi-instantanément l'onde directe 6. A titre d'exemple, le parcours de l'onde réfléchie est de l'ordre d'une dizaine de cm, plus précisément inférieur à 20cm, dans l'air 10 cm est parcouru en 300µs. A titre d'exemple, l'ordre de grandeur de la durée de l'émission (t1-t0) est de 100µs. La fin t1 de cette première période de temps 100 correspond à la fin de la réception de l'onde directe 6. Selon le mode de réalisation dans lequel l'émetteur 2 est très proche du récepteur 3, il peut être envisagé que la fin t1 de cette première période de temps 100 correspond également à la fin de l'émission d'ondes par l'émetteur 2. Suite à cette première période de temps 100, débute une deuxième période de temps 101 correspondant à l'oscillation résiduelle du récepteur 3 ou pseudo-oscillation 8. Cette deuxième période de temps 101 débute à la fin de la première période de temps 100 c'est-à-dire à t1. Cette deuxième période de temps 101 prend fin à t2 qui correspond au moment où les pseudo-oscillations 8 ne provoquent plus de signal de réception du récepteur 3 susceptible d'empêcher l'identification du signal écho. La troisième période de temps 103 correspond à la réception de l'onde réfléchie 7. La zone aveugle 9 correspond à la somme de la première période de temps 100 et à la deuxième période de temps 101. Avantageusement, la période de temps prédéterminée correspond au moins à la première période de temps 100. Avantageusement, la période de temps prédéterminée est inférieure ou égale à la somme de la première période de temps 100 et la deuxième période de temps 101. Selon une possibilité envisageable, la période de temps prédéterminée est inférieure à la première période de temps 100. Dans ce cas, le récepteur 3 est peu sensible à l'onde direct 6 ; puis redevient sensible. Toutefois le récepteur 3 n'a pas le temps d'atteindre un régime de forte amplitude, car le signal d'excitation s'arrête rapidement. Les oscillations résiduelles sont également de faibles amplitudes. La zone aveugle 9 serait ainsi quand même réduite. Préférentiellement, la période de temps prédéterminée est supérieure à la moitié de la première période de temps 100.

Selon un mode de réalisation de l'invention, le modulateur de la fréquence de résonance du récepteur 3 est configuré pour polariser le récepteur 3 ou modifier la raideur électrostatique du récepteur 3.

Selon un exemple, la polarisation du récepteur 3 est réalisée par l'application d'une tension de polarisation sur le récepteur 3. Ainsi, l'unité de contrôle commande le modulateur pour qu'il applique une tension de polarisation sur le récepteur 3 permettant ainsi de moduler la fréquence de résonance dudit récepteur 3. La polarisation du récepteur 3 s'applique particulièrement pour le dispositif d'émission et/ ou de réception selon l'invention qui sont du type transducteur piézoélectrique de type pMUT.

Selon un exemple, la modification de la raideur électrostatique du récepteur 3 est réalisée par l'application d'une tension sur le récepteur 3. Ainsi, l'unité de contrôle commande le modulateur pour qu'il applique une tension sur le récepteur 3 permettant ainsi de moduler la fréquence de résonance dudit récepteur 3. La modification de la raideur électrostatique s'applique particulièrement pour les dispositifs d'émission et/ ou de réception selon l'invention qui sont du type transducteur capacitif, couramment appelés cMUT acronyme de l'anglais pour capacitive micromachined ultrasonic transducer, c'est à dire transducteur ultrasonique micromachiné capacitif.

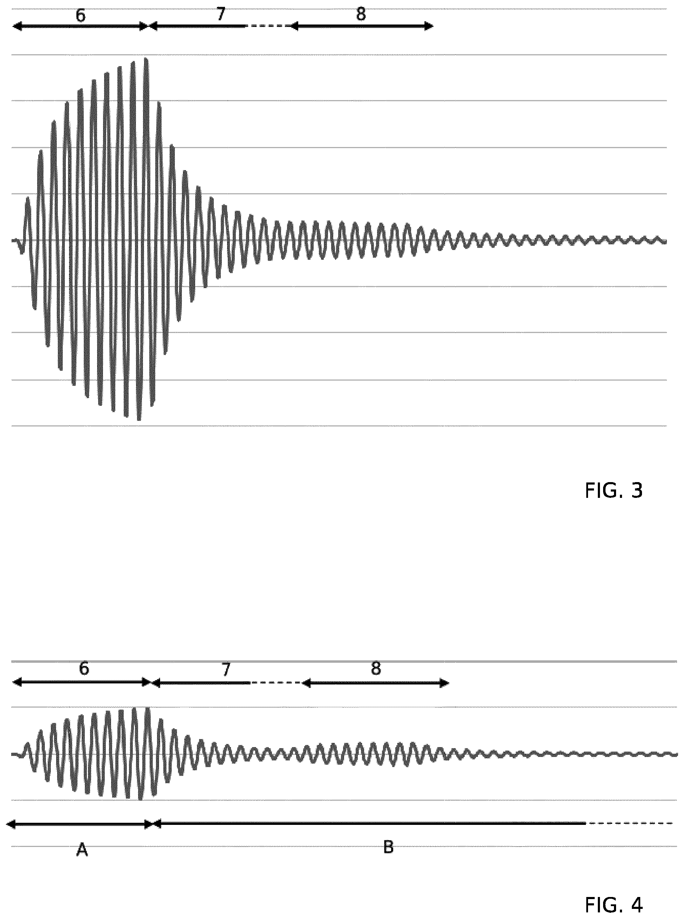

En figure 3, les oscillations de la membrane du récepteur 3 de l'état de la technique sont représentées. On constate sur cette figure au cours du temps la réception de l'onde directe 6 puis les pseudo-oscillations 8 et la réception de l'onde réfléchie 7. On voit sur cette figure que la réception de l'onde réfléchie 7 est parasitée par les pseudo-oscillations 8 suite à la réception de l'onde directe 6. Ainsi l'objet 4 est trop proche, l'onde réfléchie 7 arrive trop tôt et le signal associé est noyé dans les pseudo-oscillations 8.

En figure 4, les oscillations de la membrane du récepteur 3 selon l'invention sont représentées. On constate que la réception de l'onde directe 6 est de plus faible amplitude, puis que les pseudo-oscillations 8 sont également de plus faibles amplitudes. Après une durée assez courte, inférieure à la durée 101, le signal echo n'est plus caché par les pseudo-oscillations. Sur cette figure 4, la période de temps A correspond à la période temps prédéterminé, c'est-à-dire la période pendant laquelle la fréquence de résonance du récepteur 3 est modulée pour s'éloigner de la fréquence d'émission de l'émetteur 2, et est choisie égale à la période 100. La période de temps B correspond à une période de temps au cours de laquelle la fréquence de résonance du récepteur 3 n'est soit plus modulée pour s'éloigner de la fréquence de résonance de l'émetteur 2 soit est modulée pour se recaler sur la fréquence d'émission de l'émetteur 2.

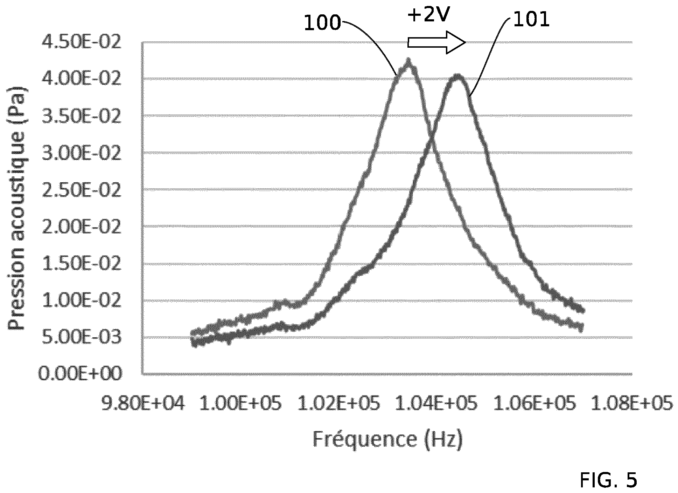

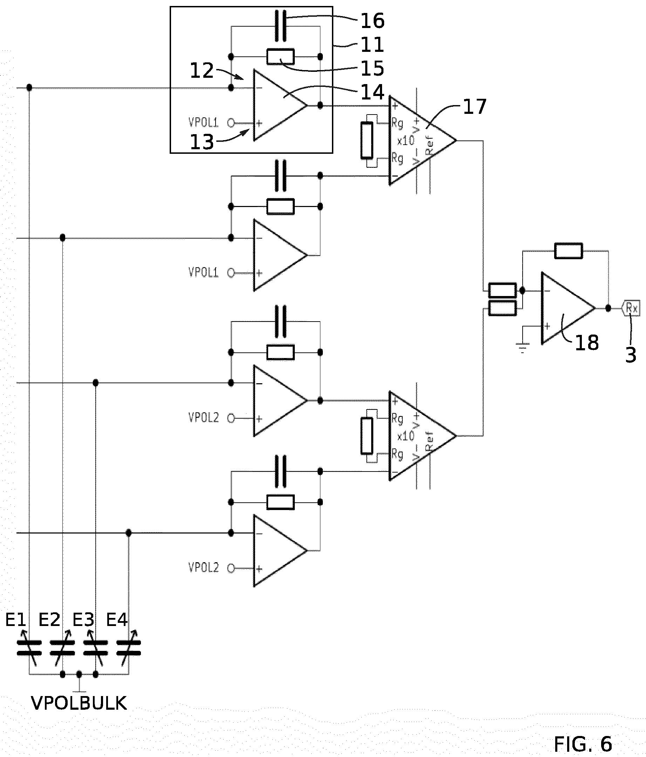

La figure 5 illustre la fréquence de résonance d'un récepteur 3. Cette figure illustre le décalage de la fréquence de résonance du récepteur 3 lorsqu'une tension continue de 2 V est appliquée suivant le schéma de la figure 6.

Des mesures ont été effectuées pour quantifier le décalage des fréquences de résonance en fonction des tensions de polarisation Vdc.

Ainsi, une membrane pMUT ayant une fréquence de résonance de 102kHz voit cette fréquence décalée de 900Hz avec une polarisation de 2V.

Si on considère des pMUT avec un facteur de qualité de 50, et une fréquence de résonance à 100kHz, alors en émettant à 100kHz, et en décalant de 1kHz de la fréquence de résonance du récepteur, c'est à dire à 101kHz, en appliquant une polarisation de 2V, au moins pendant la durée de l'émission, la sensibilité du récepteur 3 à l'onde directe 6 est réduite d'un facteur racine de 2, c'est-à-dire de l'ordre de 1,4142.

Selon mode de réalisation de l'invention, il est possible d'appliquer des tensions pouvant aller jusqu'à 20 V.

Selon un aspect de l'invention, le modulateur de la fréquence de résonance du récepteur 3 comprend un amplificateur opérationnel 11 à contre-réaction pour chaque électrode E1, E2, E3, E4. L'amplificateur opérationnel 11 comprend un amplificateur de charge 14, une résistance 15 et une capacité 16. La polarisation du récepteur 3 de type pMUT se fait via la contre-réaction de l'amplificateur opérationnel 11 également dénommé opérateur de charge. Cette utilisation est contre-intuitive : habituellement, il est préférable que les opérateurs 11 interfèrent aussi peu que possible avec les composants placés en amont. L'amplificateur opérationnel 11 a donc une double fonction : intégrer les charges générées par le récepteur 3 de type pMUT et forcer la tension sur la deuxième broche 12 au même niveau que la troisième broche 13. La tension de polarisation souhaitée aux bornes du récepteur 3 de type pMUT est appliquée à la troisième broche 13 de l'amplificateur opérationnel 11.

La figure 6 illustre un récepteur 3 selon cet aspect de l'invention.

Le récepteur 3 comprend au moins une paire d'électrodes E1/E2.

Le schéma électronique est donné pour un pMUT comprenant 2 paires d'électrodes (E1/E2 - E3/E4) soit 4 électrodes E1, E2, E3, E4. Ce schéma peut être décliné avec n (n étant un nombre entier naturel) paires électrodes « En/En+1 », polarisées à n tensions « VPOLn », avec des charges générées en opposition de phases d'une électrode à l'autre.

Chaque électrode E1, E2, E3, E4 est reliée à l'entrée inverseuse d'un amplificateur de charge dédié (par exemple, E1 est reliée à la broche 12 de l'amplificateur de charge 14). Les deux amplificateurs de charge 14 de deux électrodes d'une même paire sont connectés à un unique amplificateur d'instrumentation 17 situés en aval des deux amplificateurs de charge. Les deux amplificateurs d'instrumentation 17 sont connectés à un amplificateur 18, qui délivre le signal de sortie.

Le schéma électronique illustré à la figure 6 permet de polariser des paires d'électrodes E1/E2 et E3/E4 avec une tension de polarisation spécifique VPOL1 ou VPOL2 pour chaque paire d'électrodes pour modifier la fréquence de résonance, tout en amplifiant les charges générées en opposition de phase au sein d'une même paire d'électrodes, contrairement à ce qui est habituellement réalisé. La sortie non inverseuse des amplificateurs est en général mise à la masse et les capteurs sont polarisés via une tension unique VPOLBULK.

De manière avantageuse, l'amplificateur de charge 14 joue un double rôle : dans un sens, il amplifie les charges, en les intégrant dans la capacité 16. La résistance 15 et la capacité 16 forment alors un filtre passe haut. Dans l'autre sens, l'amplificateur de charge 14 impose une tension VPOL1 à E1 à travers la résistance 15. La résistance 15 et la capacité 16 forment alors un filtre passe bas.

L'utilisation d'un même amplificateur pour 2 fonctions : une de lecture, et une autre de polarisation est inhabituelle. Selon cet aspect, il est également surprenant d'utiliser une broche 12 d'entrée d'amplificateur 14 pour polariser, plutôt que la broche 13 de sortie.

A titre d'exemple, selon la figure 6,
VPOLBULK est à la masse,
Vpol1= -(Vpol2) = 2v,
15=10MOhms,
16=1pF,
les amplificateurs de charge et les amplificateurs d'instrumentation sont de type **«** JFET », acronyme e l'anglais Junction Field Effect Transistor c'est à dire Transistor à effet de champ de jonction pour avoir une très forte impédance d'entrée.

Selon aspect, l'invention concerne un procédé de modulation de fréquence de résonance d'un récepteur 3 de type pMUT ou cMUT notamment. Le procédé comprend avantageusement, l'application d'une tension de polarisation VPOLn à une paire d'électrode et simultanément l'amplification des charges générées en opposition de phase au sein d'une même paire d'électrodes, Les pMUT et les cMUT émettent des ultrasons dans l'air, jusqu'à 5 à 10 mètres. Ils sont également très performants en émission/réception en milieu liquide. Le dispositif de l'invention vise ainsi des applications très variées dans le domaine médical, grand public ou automobile. Les transducteurs micro-usinés ont des dimensions typiquement de l'ordre de 10 à 1000 microns et sont en général assemblés en grand nombre.

### LISTES DES REFERENCES

- 1.: Transducteur
- 2.: Emetteur
- 3.: Récepteur
- 4.: Objet
- 5.: Onde émise
- 6.: Onde directe
- 7.: Onde réfléchie
- 8.: Pseudo-oscillations
- 9.: Zone aveugle
- 10.: Temps de parcours
- 11.: Amplificateur opérationnel
- 12.: Deuxième broche
- 13.: Troisième broche
- 14.: Amplificateur de charge
- 15.: Résistance
- 16.: Capacité
- 17.: Amplificateur d'instrumentation
- 18.: Amplificateur
- A.: Modulation de la fréquence de résonance du récepteur
- B.: Recalage de la fréquence de résonance du récepteur
- C.: Fréquence de résonance du récepteur correspondant à la fréquence d'émission de l'émetteur.
- E1.: Electrode
- E2.: Electrode
- E3.: Electrode
- E4.: Electrode
- 101.: Première période de temps
- 102.: Deuxième période de temps
- 103.: Troisième période de temps

## Revendications

1. Dispositif (1) d'émission et de réception d'ondes acoustiques comprenant :
• un émetteur (2) d'ondes configuré pour transmettre à une fréquence d'émission des ondes (5) et
• un récepteur (3) d'ondes distinct de l'émetteur (2) présentant une fréquence de résonance et configuré pour recevoir des ondes générées par l'émetteur (2) et comprenant des ondes directes (6) et des ondes réfléchies (7),
**caractérisé en ce que** le dispositif comprend
• un modulateur de la fréquence de résonance du récepteur (3) et
• une unité de contrôle configurée pour commander le modulateur de la fréquence de résonance au cours d'une période de temps prédéterminée de manière à réduire la sensibilité du récepteur (3) au cours de ladite période de temps prédéterminée en éloignant la fréquence de résonance du récepteur (3) de la fréquence d'émission de l'émetteur (2) d'au moins 1/Q %, Q étant le facteur de qualité, la période de temps prédéterminée étant au moins égale à une période de temps de réception de l'onde directe (6) par le récepteur (3).

2. Dispositif selon la revendication 1 dans lequel la fréquence d'émission de l'émetteur (2) est la fréquence de résonance de l'émetteur (2).

3. Dispositif selon l'une quelconque des revendications précédentes dans lequel la fréquence d'émission de l'émetteur (2) est fixe.

4. Dispositif selon l'une quelconque des revendications précédentes dans lequel l'émetteur (2) et/ou le récepteur (3) est un transducteur micro machiné piézoélectrique de type pMUT.

5. Dispositif selon la revendication précédente dans lequel le modulateur de la fréquence de résonance du récepteur (3) est configuré pour faire varier la polarisation du récepteur (3) au cours de la période de temps prédéterminée.

6. Dispositif selon l'une quelconque des revendications 1 à 3 dans lequel l'émetteur (2) et/ou le récepteur (3) est un transducteur micro machiné capacitif de type cMUT.

7. Dispositif selon la revendication précédente dans lequel le modulateur de la fréquence de résonance du récepteur (3) est configuré pour varier la raideur électrostatique du récepteur au cours de la période de temps prédéterminée.

8. Dispositif selon l'une quelconque des revendications précédentes dans lequel le modulateur de la fréquence de résonance du récepteur (3) comprend un amplificateur de charge (11) à contre -réaction négative configuré pour intégrer la charge générée par le récepteur (3) pour appliquer une tension de polarisation prédéfinie au récepteur.

9. Procédé de détection d'ondes acoustiques par le dispositif (1) d'émission et de réception d'ondes acoustiques selon l'une quelconque des revendications précédentes comprenant les étapes ci-dessous :
• D'émission d'ondes acoustiques par l'émetteur (2) à une fréquence d'émission de l'émetteur,
• De modulation de la fréquence de résonance du récepteur (3) pendant une période de temps prédéterminée, pour l'éloigner de la fréquence d'émission de l'émetteur (2) d'au moins 1/Q % puis
• Détection d'une onde réfléchie (7) par le récepteur (3).

10. Procédé selon la revendication précédente, dans lequel la période de temps prédéterminée débute en même temps que débute l'émission d'ondes acoustiques.

11. Procédé selon l'une quelconque des deux revendications précédentes comprenant après l'émission d'ondes, la réception d'une onde directe (6) par le récepteur (3).

12. Procédé selon la revendication précédente dans lequel la modulation de la fréquence de résonance du récepteur (3) débute lors de la réception de l'onde directe (6) par le récepteur (3).

13. Procédé selon l'une quelconque des deux revendications précédentes dans lequel la modulation de la fréquence de résonance du récepteur (3) est simultanée à la réception d'une onde directe (6) par le récepteur (3).

14. Procédé selon l'une quelconque des cinq revendications précédentes dans lequel la modulation de la fréquence de résonance du récepteur (3) est réalisée par une variation de la polarisation du récepteur (3) ou une variation de la raideur électrostatique du récepteur (3).

## Patentansprüche

1. Vorrichtung (1) zum Senden und Empfangen akustischer Wellen, die Folgendes umfasst:
• einen Sender (2) von Wellen, der dazu konfiguriert ist, mit einer Sendefrequenz Wellen (5) zu übertragen, und
• einen Empfänger (3) von Wellen, der von dem Sender (2) getrennt ist, der eine Resonanzfrequenz aufweist und dazu konfiguriert ist, Wellen zu empfangen, die von dem Sender (2) erzeugt werden, und direkte Wellen (6) und reflektierte Wellen (7) umfasst,
**dadurch gekennzeichnet, dass** die Vorrichtung Folgendes umfasst
• einen Modulator der Resonanzfrequenz des Empfängers (3) und
• eine Steuereinheit, die dazu konfiguriert ist, den Modulator der Resonanzfrequenz im Laufe einer vorbestimmten Zeitspanne derart zu steuern, dass die Empfindlichkeit des Empfängers (3) während der vorbestimmten Zeitspanne reduziert wird, indem die Resonanzfrequenz des Empfängers (3) von der Sendefrequenz des Senders (2) mindestens um 1/Q % entfernt wird, wobei Q der Qualitätsfaktor ist, wobei die vorbestimmte Zeitspanne mindestens gleich einer Empfangszeitspanne der direkten Welle (6) durch den Empfänger (3) ist.

2. Vorrichtung nach Anspruch 1, wobei die Sendefrequenz des Senders (2) die Resonanzfrequenz des Senders (2) ist.

3. Vorrichtung nach einem der vorstehenden Ansprüche, wobei die Sendefrequenz des Senders (2) fix ist.

4. Vorrichtung nach einem der vorstehenden Ansprüche, wobei der Sender (2) und/oder der Empfänger (3) ein mikromechanischer piezoelektrischer Wandler vom Typ pMUT ist.

5. Vorrichtung nach dem vorstehenden Anspruch, wobei der Modulator der Resonanzfrequenz des Empfängers (3) dazu konfiguriert ist, die Polarisation des Empfängers (3) im Laufe der vorbestimmten Zeitspanne variieren zu lassen.

6. Vorrichtung nach einem der Ansprüche 1 bis 3, wobei der Sender (2) und/oder der Empfänger (3) ein kapazitiver mikromechanischer Wandler vom Typ cMUT ist.

7. Vorrichtung nach dem vorstehenden Anspruch, wobei der Modulator der Resonanzfrequenz des Empfängers (3) dazu konfiguriert ist, die elektrostatische Starrheit des Empfängers im Laufe der vorbestimmten Zeitspanne variieren zu lassen.

8. Vorrichtung nach einem der vorstehenden Ansprüche, wobei der Modulator der Resonanzfrequenz des Empfängers (3) einen Ladungsverstärker (11) mit negativer Rückkopplung umfasst, der dazu konfiguriert ist, die Ladung zu integrieren, die von dem Empfänger (3) erzeugt wird, um eine vorbestimmte Polarisationsspannung an den Empfänger anzulegen.

9. Verfahren zum Erfassen akustischer Wellen durch die Sende- und Empfangsvorrichtung (1) akustischer Wellen nach einem der vorstehenden Ansprüche, das die folgenden Schritte umfasst:
• Senden akustischer Wellen durch den Sender (2) mit einer Sendefrequenz des Senders,
• Modulation der Resonanzfrequenz des Empfängers (3) während einer vorbestimmten Zeitspanne, um die Sendefrequenz des Empfängers (2) um mindestens 1/Q % zu entfernen, dann
• Erfassen einer reflektierten Welle (7) durch den Empfänger (3).

10. Verfahren nach dem vorstehenden Anspruch, wobei die vorbestimmte Zeitspanne gleichzeitig mit dem Senden akustischer Wellen beginnt.

11. Verfahren nach einem der beiden vorstehenden Ansprüche, das nach dem Senden den Empfang einer direkten Welle (6) durch den Empfänger (3) umfasst.

12. Verfahren nach dem vorstehenden Anspruch, wobei die Modulation der Resonanzfrequenz des Empfängers (3) beim Empfang der direkten Welle (6) durch den Empfänger (3) beginnt.

13. Verfahren nach einem der beiden vorstehenden Ansprüche, wobei die Modulation der Resonanzfrequenz des Empfängers (3) mit dem Empfang einer direkten Welle (6) durch den Empfänger (3) gleichzeitig ist.

14. Verfahren nach einem der fünf vorstehenden Ansprüche, wobei die Modulation der Resonanzfrequenz des Empfängers (3) durch eine Variation der Polarisation des Empfängers (3) oder eine Variation der elektrostatischen Starrheit des Empfängers (3) realisiert wird.

## Claims

1. Device (1) for emitting and receiving acoustic waves comprising:
• a wave emitter (2) configured to transmit waves (5) at an emission frequency and
• a wave receiver (3) separate from the emitter (2) having a resonance frequency and configured to receive waves generated by the emitter (2) and comprising direct waves (6) and reflected waves (7),
**characterised in that** the device comprises
• a resonance frequency modulator of the receiver (3) and
• a control unit configured to control the resonance frequency modulator during a predetermined time period so as to reduce the sensitivity of the receiver (3) during said predetermined time period by moving the resonance frequency of the receiver (3) away from the emission frequency of the emitter (2) by at least 1/Q%, Q being the quality factor, the predetermined time period being at least equal to a time for receiving the direct wave (6) by the receiver (3).

2. Device according to claim 1, wherein the emission frequency of the emitter (2) is the resonance frequency of the emitter (2).

3. Device according to any one of the preceding claims, wherein the emission frequency of the emitter (2) is fixed.

4. Device according to any one of the preceding claims, wherein the emitter (2) and/or the receiver (3) is a PMUT-type piezoelectric micromachined transducer.

5. Device according to the preceding claim, wherein the resonance frequency modulator of the receiver (3) is configured to make the polarisation of the receiver (3) vary during the predetermined time period.

6. Device according to any one of claims 1 to 3, wherein the emitter (2) and/or the receiver (3) is a CMUT-type capacitive micromachined transducer.

7. Device according to the preceding claim, wherein the resonance frequency modulator of the receiver (3) is configured to vary the electrostatic rigidity of the receiver during the predetermined time period.

8. Device according to any one of the preceding claims, wherein the resonance frequency modulator of the receiver (3) comprises a negative counterreaction charge amplifier (11) configured to integrate the charge generated by the receiver (3) to apply a predefined polarisation voltage to the receiver.

9. Method for detecting acoustic waves by the acoustic wave emission and reception device (1) according to any one of the preceding claims, comprising the steps below:
• Emission of acoustic waves by the emitter (2) at an emission frequency of the emitter,
• Modulation of the resonance frequency of the receiver (3) during a predetermined time period, to move it away from the emission frequency of the emitter (2) by at least 1/Q%, then
• Detection of a wave reflected (7) by the receiver (3).

10. Method according to the preceding claim, wherein the predetermined time period starts at the same time as the acoustic wave emission starts.

11. Method according to any one of the two preceding claims comprising, after the emission of waves, the reception of a direct wave (6) by the receiver (3).

12. Method according to the preceding claim, wherein the modulation of the resonance frequency of the receiver (3) starts during the reception of the direct wave (6) by the receiver (3).

13. Method according to any one of the two preceding claims, wherein the modulation of the resonance frequency of the receiver (3) is simultaneous to the reception of a direct wave (6) by the receiver (3).

14. Method according to any one of the five preceding claims, wherein the modulation of the resonance frequency of the receiver (3) is done by a variation of the polarisation of the receiver (3) or a variation of the electrostatic rigidity of the receiver (3).
